Europäisches Patentamt

European Patent Office

Office européen des brevets

(11) Publication number: **0 406 187 A1**

# EUROPEAN PATENT APPLICATION

(21) Application number: **90850189.3**

(22) Date of filing: **18.05.90**

(51) Int. Cl.⁵: **H04L 9/00**

(30) Priority: **16.06.89 SE 8902166**

(43) Date of publication of application:
**02.01.91 Bulletin 91/01**

(84) Designated Contracting States:
**BE CH DE FR GB LI**

(71) Applicant: **TELEVERKET**

**S-123 86 Farsta(SE)**

(72) Inventor: **Blom, Martin**
**Televerket**
**S-123 86 Farsta(SE)**

(74) Representative: **Karlsson, Berne**
**Televerkets Huvudkontor Patent Department**
**Fack**
**S-123 86 Farsta(SE)**

(54) Method and arrangement for encryption.

(57) The present invention relates to a method and an arrangement for encryption in data communication between data terminals via a communication network. Each terminal is connected via a data bus to a modem comprising a processor with buffer which stores the data written with the terminal. The modem also comprises an encryption/decryption circuit for encrypting the data in the buffer and an interface circuit for matching the modem to the terminal concerned. According to the invention, an encryption equipment is thus provided in a special modem for all types of data communication.

EP 0 406 187 A1

## METHOD AND ARRANGEMENT FOR ENCRYPTION

The present invention relates to a method and an arrangement for encryption in data communication between terminals which communicate over a communications network, for example the Datel-Datex network.

To prevent unauthorized tapping of information from the telecommunication network, it is often desired that the data signals which transfer the information should be encrypted. Today, encrypting equipment is found in computers or in printers for two-wire connections. Since not all connections require encrypting, it would however be an advantage to install the encrypting equipment into a special modem for all types of data communication.

According to the invention, the encrypting is carried out in the terminal equipment so that the data is encrypted during the transfer into the telecommunication network. The invention specifies a method for encryption according to which the data is written with the terminal to a buffer, the buffer content is encrypted by an encryption circuit, the encrypted data is written into the buffer and the buffer is read for transmission on the telecommunication network.

The present invention also specifies an arrangement for encryption in which each terminal is connected via a data bus to a modem comprising a processor with buffer for storing data, an encryption/decryption circuit for encrypting or decrypting the data in the buffer and an interface circuit for matching the modem to the terminal concerned, the modem in turn being connected to the communication network.

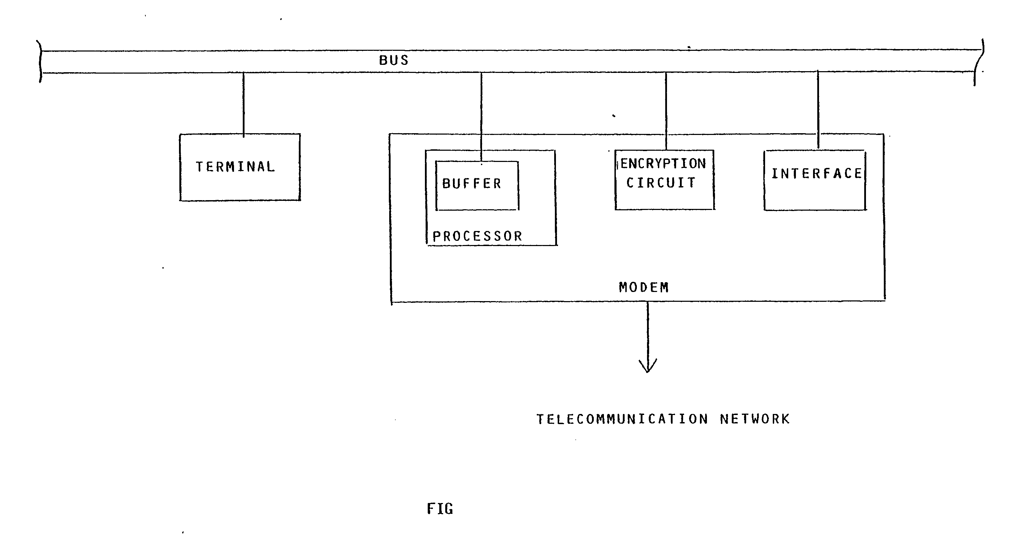

The invention is explained in greater detail below in connection with the single figure which is a basic diagram of the arrangement according to the invention.

In the figure, a terminal is shown which is connected via a data bus to a modem. The modem comprises a processor with a buffer, an encryption/decryption circuit and an interface.

Data is written in with the aid of the terminal and sent via the bus to the buffer. The data may also be stored in an external buffer. When the buffer is full or at a suitable time, a signal is given to the encryption circuit which encrypts the data which is then written back into the buffer. The encrypted data can now be read by the processor and transmitted on the telecommunication network.

The encryption circuit is preferably a micro-circuit which contains an encryption logarithm. The circuit should be RAM-compatible for coupling to the CPU card.

At the receiving terminal with corresponding modem, the reverse process occurs for decrypting the signals.

The interface circuit of the modem is used for matching the modem to the terminal concerned.

The arrangement is preferably made up of integrated circuits. There are already suitable standard components on the market.

The present invention thus provides an arrangement which is simple and inexpensive to produce. Another advantage of the invention is that the unencrypted data is transmitted over as short a path as possible, that is to say only the short path between the terminal and the modem.

### Claims

1. Method for encrypting in data communication between data terminals via the telecommunication network or similar communication network, characterized in that data is written with the terminal to a buffer; that the buffer content is encrypted by an encryption circuit; that the encrypted data is written into the buffer; and that the buffer is read for transmission on the telecommunication network.

2. Method according to Claim 1, characterized in that the encrypting is carried out when the buffer is full or at a signal to the encryption circuit.

3. Arrangement for encryption in data communication between data terminals via the telecommunication network or similar communication network, characterized in that each terminal is connected via a data bus to a modem comprising a processor with buffer for storing data, an encryption/decryption circuit for encrypting or decrypting the data in the buffer and an interface circuit for matching the modem to the terminal concerned, the modem in turn being connected to the communication network.

4. Arrangement according to Claim 3, characterized in that the encryption circuit is an integrated circuit.

5. Arrangement according to Claim 3 or 4, characterized in that the circuits are standard components.

EP 0 406 187 A1

BUS

TERMINAL

BUFFER

PROCESSOR

ENCRYPTION CIRCUIT

INTERFACE

MODEM

TELECOMMUNICATION NETWORK

FIG

| DOCUMENTS CONSIDERED TO BE RELEVANT | | | EP 90850189.3 | |
|---|---|---|---|---|
| Category | Citation of document with indication, where appropriate, of relevant passages | | Relevant to claim | CLASSIFICATION OF THE APPLICATION (Int. Cl.5) |
| A | <u>US - A - 3 878 332</u><br>(MORGAN et al.)<br>  * Abstract; column 2, line<br>    62 - column 6, line 56; fig.<br>    1,2 *<br>       -- | | 1,2 | H 04 L 9/00 |
| A | <u>DE - A - 2 131 063</u><br>(HAGELIN)<br>  * Page 2, line 23 - page 3,<br>    line 6 *<br>       -- | | 1,2 | |
| A | <u>EP - A1 - 0 022 986</u><br>(SIEMENS)<br>  * Page 4, lines 5-22; fig. 1 *<br>       ---- | | 1,2 | |
| | | | | TECHNICAL FIELDS SEARCHED (Int. Cl.5)<br><br>H 04 L |

The present search report has been drawn up for all claims

| Place of search | Date of completion of the search | Examiner |
|---|---|---|
| VIENNA | 10-10-1990 | HAJOS |

EPO FORM 1503 03.82 (P0401)